Europäisches Patentamt

European Patent Office

Office européen des brevets

(11) Publication number: **0 433 249 A2**

# (12) EUROPEAN PATENT APPLICATION

(21) Application number: 90830587.3

(22) Date of filing: 14.12.90

(51) Int. Cl.⁵: **B27B 29/00, B23D 47/04**

(30) Priority: 15.12.89 IT 376789

(43) Date of publication of application:
19.06.91 Bulletin 91/25

(84) Designated Contracting States:
AT DE ES FR GB

(71) Applicant: SCM GROUP S.p.A.
Via Emilia 77
I-47037 Rimini (Forli) (IT)

(72) Inventor: Gemmani, Giuseppe
Via Marecchiese 20
I-47037 Rimini, Forl (IT)

(74) Representative: Lanzoni, Luciano
c/o BUGNION S.p.A. Via dei Mille, 19
I-40121 Bologna (IT)

(54) **A device for supporting and positioning side clamp assemblies, in particular for woodworking machines.**

(57) The device features a carriage (13) mounted to and slidable for position along the transverse rail (7) of the hold-down bar (3), above the horizontal work table (1), and carrying at least one of the side clamps (4) by way of a vertical rack (14) that meshes with a pinion (15) keyed to and rotatable as one with the rail (7); inserting an idle gear (16) between the keyed pinion (15) and the rack (14), it becomes possible to position the side clamps (4) over the table (1) at a height which can be held constant, even when readjusting the height of the hold-down bar.

FIG. 1

EP 0 433 249 A2

# A DEVICE FOR SUPPORTING AND POSITIONING SIDE CLAMP ASSEMBLIES, IN PARTICULAR FOR WOODWORKING MACHINES

The present invention relates to a device for the support and positioning of side clamp mechanisms, for use particularly in woodworking machines such as saw tables.

The art field of woodworking equipment embraces saw tables, typically panel saws, designed for cutting rough or semi-finished stock into smaller units for subsequent infeed to a production line executing a specific machining operation.

Such saws consist essentially in a stationary bed, functioning as a horizontal table on which to lay the work for cutting, and a pair of fences invested with vertical movement disposed one on either flank of the table, one at least serving as a reference against which to position the incoming work. The fences are set in motion by respective cylinders and maintained at identical height by a horizontal rail passing transversely through both fences and carrying a pair of pinions keyed one to each end, each of which meshes with a corresponding vertical rack rigidly associated with the machine bed. The saw blade is located immediately beyond the fences, in relation to the feed direction, and divides up the stock in successive cuts executed by traversing across the longitudinal axis of the table, parallel with the horizontal rail.

The work is positioned against the reference fence by a set of pneumatic push rods disposed parallel with the table, before being clamped to the table by a horizontal bar (the main hold-down facility of the machine) carried between and rigidly associated with the two fences, which thus extends across the entire transverse dimension of the table. The bar is flanked generally by an auxiliary beam (usually hollow, and exhibiting an upturned 'U' profile when viewed in section), carrying one or more actuators located on either side of the bar and positioned transversely so as to accommodate the width of the incoming work. These actuators are also positioned vertically by corresponding upright cylinders of which the rod ends impinge on an element disposed parallel to the table and housing the actuator ; with the housing element lowered into an operative position, the actuator can be extended to shift the work transversely, urging it against the reference fence and combining with the lowered bar to ensure safe and stable positioning during the cut.

The machine thus briefly described betrays certain drawbacks, however, both in construction and in terms of practical application. A first drawback is the method adopted for supporting and positioning the side clamps, since the auxiliary beam renders the entire hold-down and positioning assembly heavy and the fences must be generously proportioned to bear the combined weight of the various components. Second, the side clamp actuators must be adjusted for height in relation to the horizontal table each time the position of the hold-down bar is altered to accommodate different thicknesses of stock (i.e. the distance from the table surface), a delaying factor that tends to prolong cutting operations. It therefore occurs to the applicant to embody a device for supporting and positioning such side clamp assemblies using the transverse rail by which the fences are interconnected, thereby achieving a significantly more lightweight structure of the machine overall.

Accordingly, the object of the present invention is to overcome the drawbacks mentioned above through the provision of a device for the support of the hold-down and side clamp assemblies in woodworking equipment such as will give a lighter machine and a more rational, automated system of positioning the side clamp actuators.

The stated object is realized with the adoption of a device as characterized in the appended claims, which consists in a carriage element associated with and adjustable for position along a transverse rail and carrying side clamp assemblies provided with at least one rack that is vertically disposed in relation to a horizontal work table ; the rack meshes with an idle gear, and the idle gear with a pinion keyed to and rotatable as one with the rail, in such a way as to permit of maintaining the side clamp actuators at a given height above the table even though the height of the hold-down clamps may be altered.

One of the advantages afforded by the invention is reflected in the provision of a carriage to support the work clamps directly from the transverse rail (the rail being a standard part in the structure of conventional machines), which enables a notable reduction in the mass of the clamp equipment, and in consequence, reduced pressure on the moving side fences.

A further advantage is that of having rendered the side clamp assemblies independent of the hold-down bar (by inclusion of the idler between the relative rack and the pinion), whenever vertical adjustment of the fences is required to accommodate different thicknesses of stock.

The invention will now be described in detail, by way of example, with the aid of the accompanying drawings, in which :

– fig 1 is the front elevation of a saw table with certain parts omitted, incorporating the device according to the invention viewed in an operating position ;

– fig 2 is a frontal elevation of the machine shown in fig 1 with certain parts omitted, viewed with the device according to the invention in an at-rest position ;

– fig 3 shows the view from A in fig 1, with certain parts omitted better to reveal others.

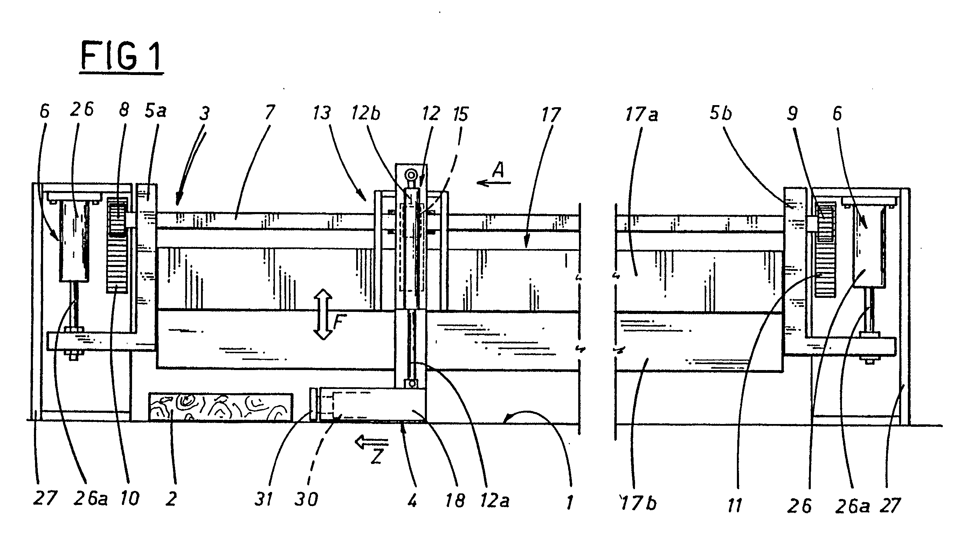

As illustrated in the drawings, a device according to the invention is intended for use in woodworking machines, and in particular panel saws, comprising a horizontal bed or table 1 on which the work 2 to be cut is laid flat ; such a machine also comprises means 3 serving to hold the work down from above, and means 4 serving to clamp the work against a lateral reference, which are located substantially at the runout end of the machine and positioned transversely in relation to the longitudinal axis of the horizontal table 1. Such hold-down means 3 and side clamp means 4 serve to position and secure the work 2 in relation to a cutting tool that will be positioned alongside (a given distance beyond, along the feed direction of the work 2 which runs perpendicular to the plane of elevation in fig 1), and is capable of transverse movement across the horizontal table 1 (the tool is conventional, and therefore not illustrated).

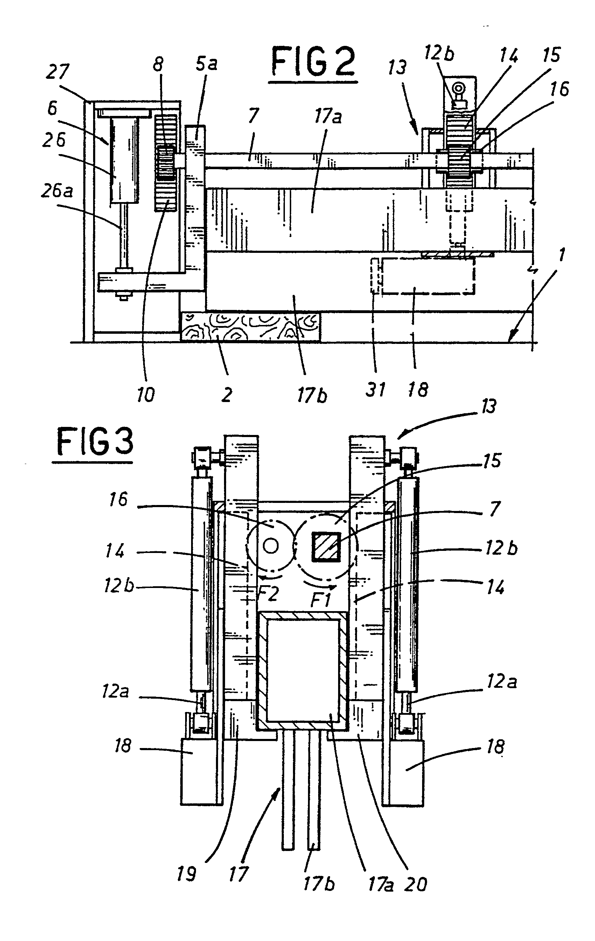

In the example of figs 1 and 2, hold-down means 3 consist in a bar 17 of which the profile, viewed in section (see fig 3) comprises two parts, namely a top part 17a of quadrangular hollow section, and a second part suspended from the top part 17a and consisting in a vertical blade 17b positioned to enter into direct contact with the work 2. The side clamp means 4 comprise a pair of parallel mounts 18 positioned one on either side of the blade 17b and carried by the end of a piston rod 12a disposed at right angles to the mount and associated with a respective cylinder 12b.

The hold-down means 3 and side clamp means 4 thus embodied are suspended between a pair of fences 5a and 5b (the side clamps 4 are supported indirectly by the fences, as will become clear in due course) positioned one on either side of the table 1 and invested with movement by first pneumatic means 6 in the vertical direction, denoted F, between a position distanced from the table 1 (fig 1) and a position close to the table (fig 2). Such movement is brought about by a pair of cylinders 26 piloted remotely from a control unit and constituting the first pneumatic means 6, which are mounted rigidly to the fixed frame 27 of the machine and connected by their respective rods 26a to the two fences 5a and 5b.

The vertical movement of the two fences 5a and 5b between the two positions previously mentioned is synchronized horizontally by a transverse rail 7 extending across the horizontal table 1 above the hold-down means 3 and side clamp means 4 and able to rotate about its own longitudinal axis. Passing through and thus interconnecting the fences 5a and 5b, the rail 7 carries two pinions 8 and 9, one at each end, in mesh with relative vertical racks 10 and 11 rigidly associated with the fixed frame 27.

The side clamp means 4 are rendered capable of vertical movement independently of the fences by second pneumatic means 12 associated directly with each of the two clamp mounts, between an operative position close to the horizontal table 1, and an at-rest position distanced from the table. Such second means consist in the pneumatic cylinders 12b already mentioned, which are disposed perpendicular to the mounts 18 and to the table 1 and connected each with the corresponding mount 18 by way of the respective piston rod 12a.

It is into a structure of this type that the device according to the present invention is integrated ; more exactly, the device consists in a carriage 13 mounted to the transverse rail 7 and slidable along its entire length. The carriage 13 is of box-like embodiment, enclosed on three sides (see fig 3) in such a way as to encompass the rail 7 completely, with two internal walls that terminate at bottom in mutually opposed brackets 19 and 20 offered to the hollow section 17a of the hold-down bar from either side.

The external part of the carriage 13 provides the support for the side clamp assemblies 4, or more precisely for the corresponding cylinders 12b, one of which is associated with a rack 14. The rack 14, disposed parallel to the cylinder 12, is associated with the inside wall of the carriage 13 (recessed into a channel, for example) with the teeth facing inwards, and is driven by a pinion 15 keyed to the rotatable rail 7, engaging indirectly by way of an idle gear 16. The mounts 18 and the cylinders 12b can thus be positioned and maintained at a given height in relation to the horizontal table 1 while permitting movement of the hold-down bar 17 away from and toward the table between the operative and at-rest positions.

Operation of the device will now be described.

The work 2 is fed along the horizontal table 1 by push rods at the machine infeed (not shown in the drawings, being outside the scope of the invention) to a position alongside the side clamp means 4, which will have been traversed previously along the rail 7 in the direction denoted Z into a position suitable for the width of the incoming work, the carriage 13 then being clamped to the rail 7 with the mounts 18 in the lowered operative position, all but in contact with the table 1 (see fig 1).

The work 2 is thus directed between the mounts 18 and the fence 5a, then butted firmly against the reference surface of the fence by third pneumatic means 30 accommodated internally of each mount 18 (phantom line, fig 1), which occasion the emergence of a relative horizontal push rod 31 ; at this point the work 2 is correctly positioned in readiness for the cut.

The first cylinders 26 now extend to lower the hold-down means 3 into the operative position, i.e. the bar 17 is caused to descend bodily with the side fences 5a and 5b to the point at which the blade 17b enters into contact with the work 2, clamping it against the table 1 (the position of fig 2), whereupon the tool can proceed to effect the cut.

Having already completed their assigned function, the side clamp means 4 can remain in the lowered position throughout the restraining and releasing movements of the hold-down means 3 ; in effect, the train comprising rack 14, idler 16 and pinion 15 allows the pinion 15 to rotate in one direction F1 (see fig 3) together with the rail 7 and the idle gear 16 to rotate in the opposite direction F2, and thus enables the side clamp mounts 18 to hold a stationary position independently of the movement of the hold-down means 3.

One idle gear 16 only is illustrated in the example of the drawings, given that the two cylinders 12b are interconnected rigidly by the walls of the carriage 13 and therefore equally affected by any rotational movement. Clearly enough, in the event that the carriage 13 should be embodied in two distinct halves, a second idler 16 could be located between a rack 14 associated with the remaining cylinder, and the pinion 7 keyed to the rail 7.

## Claims

1. A device for supporting and positioning side clamp assemblies, intended in particular for woodworking machines comprising, at least :
   - a horizontal table (1) on which to lay work (2) for cutting,
   - hold-down means (3) and side clamp means (4) located substantially at the runout end of the machine and extending transversely across the longitudinal axis of the table (1), by which the work is positioned and secured against the action of an adjacent cutting tool capable of traversing horizontally across the direction followed by work fed along the table (1),
   - a pair of fences (5a, 5b) serving to support the hold-down means (3) and the side clamp means (4), installed one on either side of the horizontal table (1), interconnected by a rail (7) extending transversely across the table (1) above the hold-down means (3) and side clamp means (4), rotatable about its own longitudinal axis and fitted at each end with a pinion (8, 9) offered in meshing contact to a relative vertical rack (10, 11) fixed to the corresponding fence (5a, 5b),
   - first pneumatic means (6) by which the fences (5a, 5b) are invested with vertical movement between a position distanced from the horizontal table (1) and a position close to the table,
   - second pneumatic means (12) associated with and serving to invest the side clamp means (4) with vertical movement between an operative position close to the table (1) and an at-rest position distanced from the table, characterized
in that it substantially comprises a carriage (13) mounted slidably to and adjustable for position along the entire length of the transverse rail (7), supporting side clamp means (4) associated with at least one vertically disposed rack (14), a pinion (15) keyed to the rotatable transverse rail (7), and at least one idle gear (16) located between and in mesh with the pinion (15) and the rack (14) in such a way as to permit of positioning the side clamp means (4) at a constant height in relation to the horizontal table (1) during vertical movement of the hold-down means (3).

2. A device as in claim 1, associated with hold-down means consisting in a bar (17) of cross sectional profile that exhibits an upper hollow part (17a) and a bottom blade (17b) suspended from the upper part and positioned to enter into contact with the work (2), and side clamp means (4) comprising a pair of mounts (18) disposed mutually parallel on either side of the blade (17b) and connected with the ends of piston rods (12a) extending at right angles to the mount (18) from respective cylinders (12b) constituting the second pneumatic means (12), wherein of two cylinders (12b) supported rigidly on either side of the carriage (13), one is associated with a corresponding rack (14) meshing by way of a respective idle gear (16) with the pinion (15) keyed to the transverse rail (7), in such a manner as to permit of positioning both mounts (18) at a constant height in relation to the table (1) independently of any alteration of the height of the hold-down bar (17) in relation to the table.

3. A device as in claim 2, wherein the carriage (13) is embodied as a box-like structure enclosed on at least three sides, of which the exterior supports the cylinder (12b) and the interior affords a pair of bracket walls (19, 20) by which the upper part (17a) of the hold-down bar (17) is encompassed on either side.

4. A device as in claim 2, wherein each of the two cylinders (12b) is associated with a rack (14) in mesh with a corresponding idle gear (16) that meshes in turn with the pinion (15) keyed to the transverse rail (7).

## FIG 1

# FIG 2

# FIG 3